# EUROPEAN PATENT APPLICATION

(11) **EP 1 513 367 A2**
(43) Date of publication of application: **09.03.2005**
(21) Application number: 04254625.9
(22) Date of filing: 31.07.2004
(51) Int. Cl.: H04Q 7/38

(54) **Uplink timing in a wireless communications system**

(30) Priority: 18.08.2003 US 643213
(71) Applicant: LUCENT TECHNOLOGIES INC., Murray Hill, New Jersey 07974-0636 (US)
(72) Inventor: Cheng, Fang-Chen, Randolph, New Jersey 07869 (US); Teck, Hu, Budd Lake, New Jersey 07828 (US)
(74) Representative: Watts, Christopher Malcolm Kelway, Dr.

(57) **Abstract**

A method for controlling the flow of information between a UE and a Node B is provided. The UE transmits over a control channel to the Node B a signal requesting to transmit information to the Node B. The Node B uses information regarding a delay, such as a propagation and/or processing delay, associated with the UE to schedule the transmission of data. The UE then receives over a shared channel from the Node B a signal identifying a time at which the UE is permitted to transmit information. Thereafter, the UE transmits at the identified time over a data channel to the Node B a signal containing the information.

## Description

### BACKGROUND OF THE INVENTION

### 1. FIELD OF THE INVENTION

This invention relates generally to telecommunications, and, more particularly, to wireless communications.

### 2. DESCRIPTION OF THE RELATED ART

In the field of wireless telecommunications, such as cellular telephony, a system typically includes a plurality of Node Bs (*e.g.*, base stations) distributed within an area to be serviced by the system. Various users within the area, fixed or mobile, may then access the system and, thus, other interconnected telecommunications systems, via one or more of the Node Bs. Typically, a UE (e.g., a user) maintains communications with the system as the user passes through an area by communicating with one and then another Node B, as the user moves. The user may communicate with the closest Node B, the Node B with the strongest signal, the Node B with a capacity sufficient to accept communications, *etc*.

Commonly, each Node B is constructed to process a plurality of communications sessions with a plurality of users in parallel. In this way, the number of Node Bs may be limited while still providing communications capabilities to a large number of simultaneous users. Typically, each user is generally free to transmit information to the Node B with regard to the interference to other users being controlled properly. That is, multiple users may transmit information to the Node B at the same time. This unregulated transfer of information, however, results in interference between users whose transmissions overlap.

In systems that transmit voice, or even data at relatively low speeds, the interference caused by overlapping transmissions is controlled to meet the quality of service requirement of the communications session. However, as use of the Internet, e-mail and other data-intensive services have become ubiquitous, wireless communications systems are now attempting to provide some of these same services. These types of services, however, require large amounts of data to be transmitted at relatively high speed. In a system that is intended to transmit large amounts of data at high speed, the interference can be significant. In fact, the interference caused by overlapping transmissions can impose substantial limits on the speed at which data can be transmitted, rendering high-speed data communications unworkable in some instances.

The present invention is directed to overcoming, or at least reducing, the effects of one or more of the problems set forth above.

### SUMMARY OF THE INVENTION

In one aspect of the instant invention, a method is provided. the method comprises associating a delay with a request to transmit information, and transmitting a signal identifying a time at which information is permitted to be transmitted based on the delay.

In one aspect of the instant invention, a method is provided for controlling a flow of information in a communications system. The method may comprise receiving a signal requesting to transmit information and associating a delay with the request to transmit information. Thereafter, a time is determined at which the information is permitted to be transmitted based on the delay, and a signal identifying the time at which information is permitted to be transmitted is transmitted.

In another aspect of the instant invention, a method for controlling the flow of information between a user and a base station. The method comprises receiving a synchronizing signal from the base station. A signal is transmitted from the user requesting permission from the base station to transmit information. Thereafter, a signal is received from the base station identifying a time relative to the synchronizing signal at which information is to be transmitted, and then the information is transmitted from the user to the base station at the identified time.

### BRIEF DESCRIPTION OF THE DRAWINGS

The invention may be understood by reference to the following description taken in conjunction with the accompanying drawings, in which like reference numerals identify like elements, and in which:
Figure 1 is a block diagram of a communications system, in accordance with one embodiment of the present invention;
Figures 2A-B depict a block diagram of one embodiment of a Node B and two UEs used in the communications system of Figure 1;
Figure 3 is a flow diagram illustrating the interoperation of the Node B and the UE of Figures 1 and 2; and
Figure 4 is a timing diagram illustrating the interoperation of the Node B and the two UEs of Figure 2.

While the invention is susceptible to various modifications and alternative forms, specific embodiments thereof have been shown by way of example in the drawings and are herein described in detail. It should be understood, however, that the description herein of specific embodiments is not intended to limit the invention to the particular forms disclosed, but on the contrary, the intention is to cover all modifications, equivalents, and alternatives falling within the spirit and scope of the invention as defined by the appended claims.

### DETAILED DESCRIPTION OF SPECIFIC EMBODIMENTS

Illustrative embodiments of the invention are described below. In the interest of clarity, not all features of an actual implementation are described in this specification. It will of course be appreciated that in the development of any such actual embodiment, numerous implementation-specific decisions must be made to achieve the developers' specific goals, such as compliance with system-related and business-related constraints, which will vary from one implementation to another. Moreover, it will be appreciated that such a development effort might be complex and time-consuming, but would nevertheless be a routine undertaking for those of ordinary skill in the art having the benefit of this disclosure.

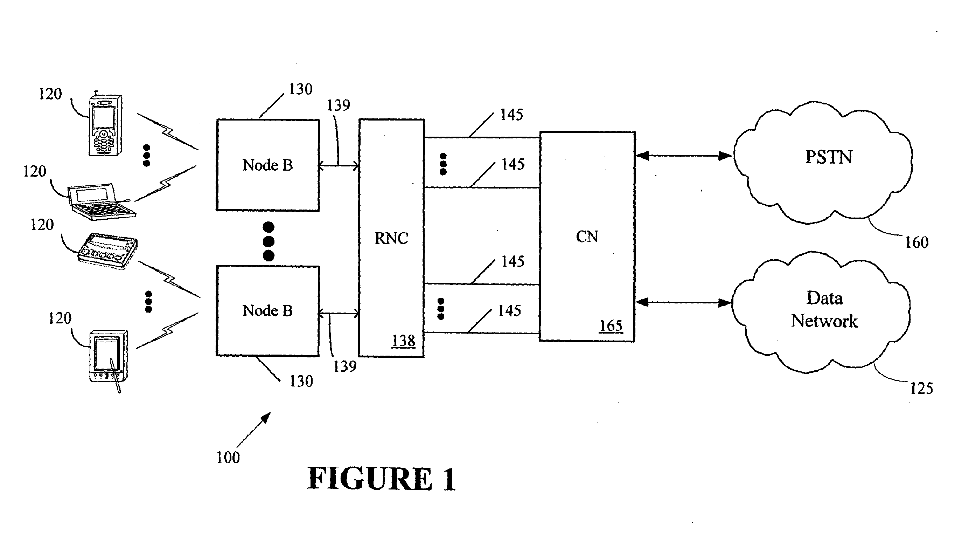

Turning now to the drawings, and specifically referring to Figure 1, a communications system 100 is illustrated, in accordance with one embodiment of the present invention. For illustrative purposes, the communications system 100 of Figure 1 is a Universal Mobile Telephone System (UMTS), although it should be understood that the present invention may be applicable to other systems that support data and/or voice communication. The communications system 100 allows one or more UEs 120 to communicate with a data network 125, such as the Internet, through one or more Node Bs 130. The UE 120 may take the form of any of a variety of devices, including cellular phones, personal digital assistants (PDAs), laptop computers, digital pagers, wireless cards, and any other devices capable of accessing the data network 125 through the Node B 130.

In one embodiment, a plurality of the Node Bs 130 may be coupled to a Radio Network Controller (RNC) 138 by one or more connections 139, such as T1/EI lines or circuits, ATM circuits, cables, optical digital subscriber lines (DSLs), and the like. Although only two RNCs 138 are illustrated, those skilled in the art will appreciate that a plurality of RNCs 138 may be utilized to interface with a large number of Node Bs 130. Generally, the RNC 138 operates to control and coordinate the Node Bs 130 to which it is connected. The RNC 138 of Figure 1 generally provides replication, communications, runtime, and system management services. The RNC 138, in the illustrated embodiment handles calling processing functions, such as setting and terminating a call path and is capable of determining a data transmission rate on the forward and/or reverse link for each UE 120 and for each sector supported by each of the Node Bs 130.

The NRC 138 is, in turn, coupled to a Core Network (CN) 165 via a connection 145, which may take on any of a variety of forms, such as T1/EI lines or circuits, ATM circuits, cables, optical digital subscriber lines (DSLs), and the like. Generally the CN 140 operates as an interface to a data network 125 and/or to a public telephone system (PSTN) 160. The CN 140 performs a variety of functions and operations, such as user authentication, however, a detailed description of the structure and operation of the CN 140 is not necessary to an understanding and appreciation of the instant invention. Accordingly, to avoid unnecessarily obfuscating the instant invention, further details of the CN 140 are not presented herein.

The data network 125 may be a packet-switched data network, such as a data network according to the Internet Protocol (IP). One version of IP is described in Request for Comments (RFC) 791, entitled "Internet Protocol," dated September 1981. Other versions of IP, such as IPv6, or other connectionless, packet-switched standards may also be utilized in further embodiments. A version of IPv6 is described in RFC 2460, entitled "Internet Protocol, Version 6 (IPv6) Specification," dated December 1998. The data network 125 may also include other types of packet-based data networks in further embodiments. Examples of such other packet-based data networks include Asynchronous Transfer Mode (ATM), Frame Relay networks, and the like.

As utilized herein, a "data network" may refer to one or more communication networks, channels, links, or paths, and systems or devices (such as routers) used to route data over such networks, channels, links, or paths.

Thus, those skilled in the art will appreciate that the communications system 100 facilitates communications between the UEs 120 and the data network 125. It should be understood, however, that the configuration of the communications system 100 of Figure 1 is exemplary in nature, and that fewer or additional components may be employed in other embodiments of the communications system 100 without departing from the spirit and skill of the instant invention. For example, system 100 may employ routers (not shown) between the Node Bs 130 and the RNC 138 or CN 165.

Unless specifically stated otherwise, or as is apparent from the discussion, terms such as "processing" or "computing" or "calculating" or "determining" or "displaying" or the like, refer to the action and processes of a computer system, or similar electronic computing device, that manipulates and transforms data represented as physical, electronic quantities within the computer system's registers and memories into other data similarly represented as physical quantities within the computer system's memories or registers or other such information storage, transmission or display devices.

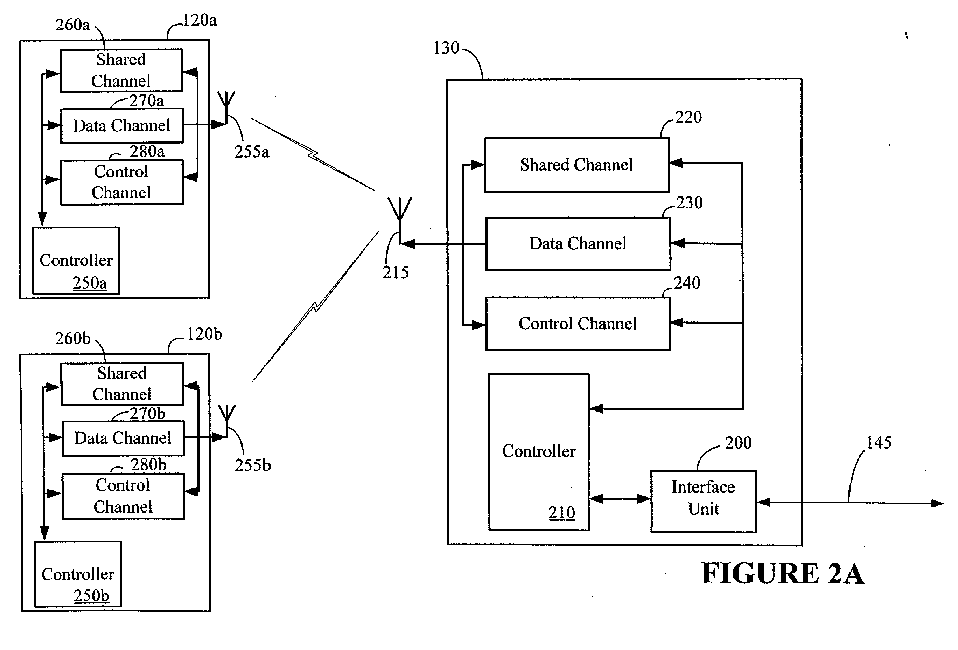

Referring now to Figure 2A, a block diagram of one embodiment of a functional structure associated with an exemplary Node B 130 and a pair of UEs 120a, 120b is shown. The Node B 130 includes an interface unit 200, a controller 210, an antenna 215 and a plurality of types of channels: a shared channel type 220, a data channel type 230, and a control channel type 240. The interface unit 200, in the illustrated embodiment, controls the flow of information between the Node B 130 and the RNC 138 (see Figure 1). The controller 210 generally operates to control both the transmission and reception of data and control signals over the antenna 215 and the plurality of channels 220, 230, 240 and to communicate at least portions of the received information to the RNC 138 via the interface unit 200.

In the illustrated embodiment, the UEs 120a, 120b are substantially similar at least at a functional block diagram level. Those skilled in the art will appreciate that while the UEs 120a, 120b are illustrated as being functionally similar in the instant embodiment, substantial variations may occur without departing from the spirit and scope of the instant invention. For purposes of describing the operation of the instant invention it is useful to describe the UEs 120a, 120b as being functionally similar. Thus, for the instant embodiment, the structure and operation of the UEs 120a, 120b is discussed herein without reference to the "a" and "b" suffixes on their element numbers, such that a description of the operation of the UE 120 applies to both of the UEs 120a, 120b.

The UE 120 shares certain functional attributes with the Node B 130. For example, the UE 120 includes a controller 250, an antenna 255 and a plurality of channel types: a shared channel type 260, a data channel type 270, and a control channel type 280. The controller 250 generally operates to control both the transmission and reception of data and control signals over the antenna 255 and the plurality of channel types 260, 270, 280.

Normally, the channel types 260, 270, 280 in the UE 120 communicate with the corresponding channel types 220, 230, 240 in the Node B 130. Under the operation of the controllers 210, 250 the channel types 220, 260; 230, 270; 240, 280 are used to effect a controlled time scheduling for communications from the UE 120 to the Node B 130, which is often referred to as an uplink. For example, in one embodiment of the instant invention, the Node B 130 controls the UEs 120a, 120b to ensure that little or no overlap in their uplink transmissions occurs. In this way, the Node B 130 may reduce the amount of interference experienced by reducing or eliminating the amount of time that both UEs 120a, 120b are simultaneously transmitting. Those skilled in the art will appreciate that while the instant embodiment illustrates and describes the invention in the context of two UEs 120a, 120b, the similar principles apply in applications with more UEs.

The control channel type 280 is generally used by the UE 120 to request permission to transmit data and/or control information to the Node B 130. The shared channel type 220 is used by the Node B 130 to notify the UE 120 of the circumstances under which it may transmit to the Node B 130 via the data and control channel types 270, 280. That is, the Node B 130 may use the shared channel type 220 to notify the UE 120a that it may begin to transmit data at a first preselected time.

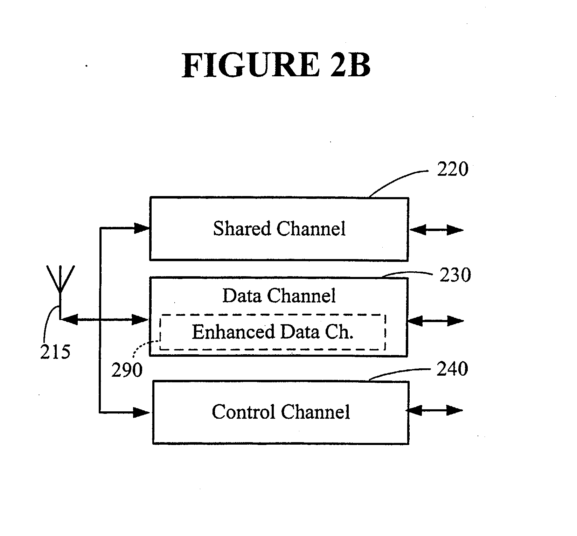

Referring now to Figure 2B, in the illustrated embodiment, it is anticipated that the shared, data and control channel types 220, 230, 240 of the Node B 130 may be comprised of one or more channels. For example, the data channel 230 may include a secondary or enhanced data channel 290. The UEs 120 may be similarly configured so that an uplink transfer of data from the UE 120 to the Node B 130 may occur over the enhanced data channel 290.

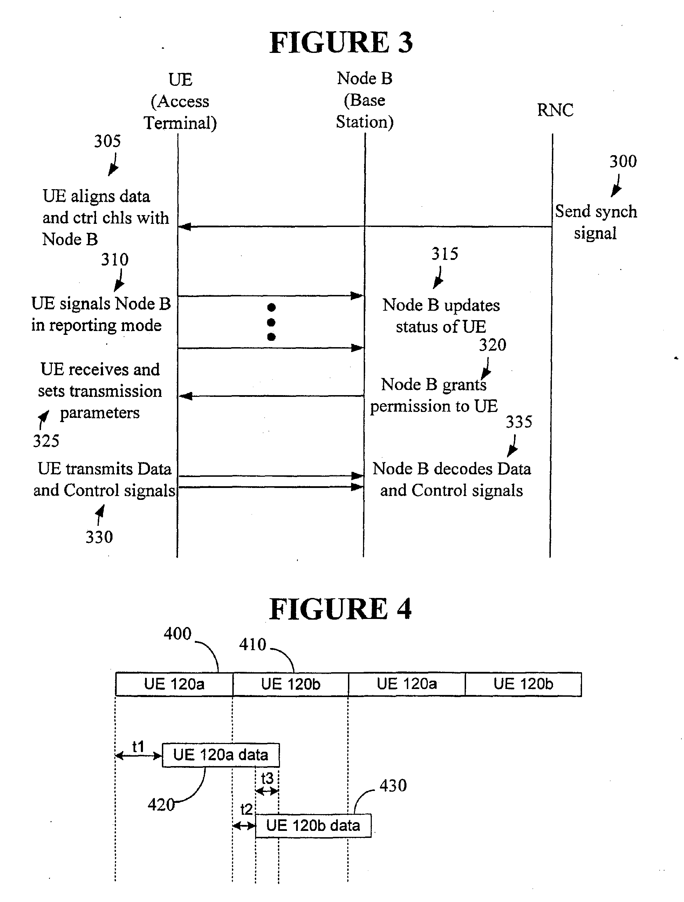

Turning now to Figure 3, a flow diagram illustrating the interoperation of one of the Node Bs 130 and one of the UEs 120 of Figures 1 and 2 is shown. In the flow diagram of Figure 3, the RNC 138 provides a signal (at 300) through the Node B 130 to align or synchronize the operation of the Node B 130 and the UE 120. In the illustrated embodiment, different Node Bs 130 that are assigned to different RNCs 138 are operating with different system clocks from the instant RNC 138 and Node B 130. Therefore, to insure proper timing of signals between the Node B 130 and the UE 120, the first operation is to synchronize at least the communications between the two devices. In the illustrated embodiment, a synchronizing signal is transmitted by the Node B 130 over the shared channel, which in a UTMS corresponds to a Primary Common Control Physical Channel (P-CCPCH).

In the illustrated embodiment, the UE 120 (at 305) responds to the synchronization signal by aligning (or realigning) the timing of signals to be delivered over the control and data channel types 280, 270.

The UE 120 has data signals that it desires to transmit to the Node B 130. However, before the UE 120 is allowed to transmit data to the Node B 130, it must first request, and be granted, permission. Accordingly, the UE 120 (at 310) periodically sends a reporting signal over the control channel type 280 indicating that it has data/voice to be transmitted to the Node B 130. The Node B 130 (at 315) receives the signal on its control channel 240, updates the status of the UE 120, indicating that the UE 120 is in the scheduled mode of operation and desires to transmit data. The Node B 130 also determines certain information from parameters, such as quality and strength, of the signal received from the UE 120. For example, based on the quality and strength of the signal, the Node B 130 may determine that the UE 120 needs to adjust its transmitting power (increase or decrease).

The Node B 130 (at 320) responds to the request from the UE 120 by delivering a signal over the shared channel 220, granting permission to the Node B 130 to deliver its data over the enhanced data channel 290. Assuming that a plurality of UEs 120 have requested to send data to the Node B 130, the Node B 130 grants permission to each of the UEs 120 to transmit their data within a preselected slot, where the timing of the slot is based on the synchronizing signal. For example, UE 120a may be granted permission to deliver data in time slot 1 and UE 120b may be granted permission to deliver data in time slot 2.

The Node B 130 may use information obtained from the UEs 120 in determining the order and timing of the data to be sent from each of the UEs 120. For example, the Node B 130 may use information derived from a prior signal or signals received from the UEs 120a, 120b in determining the slots in which the UEs 120a, 120b may transmit so as to reduce or even eliminate signal overlap and resulting interference therebetween.

Because the UEs 120 may be at different locations, and thus different distances from the Node B 130, the length of time that it takes for a transmitted signal to travel from the Node B 130 to the UE 120 and back may vary. Additionally, different UEs 120 may have different operating speeds and characteristics, such that their response times may differ, further contributing to variations in the timing of signals delivered from the UEs 120 to the Node B 130. That is, the propagation time for signals transmitted between the Node B 130 and the UEs 120a, 120b may be significant and may be substantially different. Moreover, because the UEs 120 are typically mobile, the propagation time may vary substantially over time. This variable propagation time, if not accounted for, may produce undesirable results, such as unacceptable overlap between uplink signals.

A timing diagram illustrating an exemplary overlap condition between data transmitted to the Node B 130 from the UEs 120a, 120b is illustrated in Figure 4. In the illustrated embodiment, the Node B 130 serially provides signals 410, 420 granting permission to the UEs 120a, 120b to transmit data within specified time periods. In the illustrated embodiment the UE 120a is positioned a first distance from the Node B 130 such that when the UE 120a begins transmitting data 420 to the Node B 130, it will be received at the node B 130 after a propagation delay t1. Similarly, the UE 120b is positioned a second, different distance from the Node B 130 such that when the UE 120b begins transmitting data 430 to the Node B 130, it will be received at the Node B 130 after a propagation delay t2. In the illustrated embodiment, the data signals 420, 430 overlap one another for a time period t3. During this overlap period t3, the data signals 420, 430 may interfere with one another causing data to be lost.

The instant invention attempts to eliminate, or at least reduce, the overlap period t3 while minimizing, or at least reducing, the period of time between data transmissions from the UEs 120a, 120b. The Node B 130 uses anticipated propagation delays associated with the UEs 120a, 120b when scheduling the data transmissions 420, 430. That is, the Node B 130 determines or estimates the propagation delay associated with the UE 120a, and then uses that propagation delay in determining the time at which to allow the UE 120b to begin transmitting. In one embodiment, the process of determining or estimating propagation delays may be repeated each time a signal is received from the UEs 120. In this way, the dynamic nature of propagation delays may be detected and accounted for in scheduling the UEs 120 to deliver data.

Returning to Figure 3, the UE 120 (at 325) examines the signal from the Node B 130 and determines the time slot in which it is to transmit data over the enhanced data channel 290. In one embodiment, the Node B 130 provides a signal commonly referred to as the system cell number (SFN) along with a unique offset associated with each UE 120. The unique offset indicates the slot in which the associated UE 120 is permitted to transmit data. For example, the UE 120a may receive the SFN along with an offset of 1, while the UE 120b receives the SFN along with an offset of 3. Thus, the UEs 120a, 120b "know" that they are permitted to transmit data during the first and third slots, respectively.

Thus, at the appointed time, the UE 120 (at 330) begins transmitting its data signal or packet over the enhanced data channel 290. At substantially the same time, the UE 120 may also transmit a signal over the control channel 280. The UE 120 may use the control channel 280 to indicate parameters associated with the signals being provided over the enhanced data channel 290. The Node B 130 may use the information provided on the control channel 280 to decode information received on the enhanced data channel 290.

The Node B 130 (at 335) receives the information provided over both the enhanced data and control channels 290, 240. The information on the control channel 240 is decoded and used to decode the data signal provided over the enhanced data channel 290. The decoded data signals are then forwarded through the interface unit 200 to the various components of the system 100. The Node B 130 also "knows" the slot in which it should receive data over the enhanced channel from each of the UEs 120. The Node B 130 may then compare the actual time that it receives data from the UE 120 with the scheduled time, and any variations may be attributed to propagation and/or processing delays and used by the Node B 130 in scheduling future transmissions from the UEs 120.

The delay associated with the UE 120 may be used to control the scheduling of uplink transmissions from the UE 120, or, in the alternative, the Node B 130 may compensate for the delay. In a first embodiment, the Node B 130 may elect to not schedule an uplink transmission from any of the UEs 120 following an uplink transmission from the UE 120 with the known delay. In this way, overlapping uplink transmissions from the UEs 120 may be eliminated or at least reduced. For example, assume the UE 120a transmits uplink information without significant delay, whereas the Node B 130 has received uplink information from UE 120b significantly later than scheduled. The Node B 130 may schedule the UEs 120a, 120b to transmit data in respective slots 1, 2; 4, 5; 7, 8, *etc*., thereby leaving slots 3, 6, 9, *etc*. open or unscheduled. Thus, when the UE 120b transmits its information in slots 2, 5, 8, *etc.* it will not overlap with data transmitted in slots 3, 6, 9, etc., as no information is being transmitted in those slots.

Alternatively, the Node B 130 may attempt to alter the time at which the UE 120b is permitted to transmit. For example, if the Node B 130 "knows" that it receives information from the UE 120b 5 msec after the scheduled time, then it may instruct the UE 120b to begin transmitting uplink information 5 msec early. There are at least two ways in which the Node B 130 may instruct the UE 120b to transmit early. In a first embodiment, the Node B 130 may provide a unique synchronization signal to the UE 120b. In this embodiment, the unique synchronization signal for the UE 120b would lead the synchronization signal for the UE 120a by approximately the "known" delay associated with the UE 120b. That is, the Node B 130 may provide a unique synchronization signal to each UE 120 to compensate for any detected delays associated with each of the UEs 120.

Alternatively, the Node B 130 could provide a universal synchronization signal but also include an offset for each of the UEs 120, where the offset corresponds to the measured delay associated with each UE 120. For example, assuming that the UE 120b has a 5 msec delay associated with its uplink transmissions, then the Node B 130 may advise the UE 120 b to transmit uplink information in slots 2, 4, 6 but with a 5 msec offset. Thus, the UE 120b would begin its uplink transmission 5 msec prior to the beginning of slot 2, 4, 6. Owing to the 5 msec delay, however, the Node B 130 will not receive the uplink transmission until at about the beginning of slots 2, 4, 6.

Those skilled in the art will appreciate that the various system layers, routines, or modules illustrated in the various embodiments herein may be executable control units (such as the controllers 210, 250 (see Figure 2)). The controllers 210, 250 may include a microprocessor, a microcontroller, a digital signal processor, a processor card (including one or more microprocessors or controllers), or other control or computing devices. The storage devices referred to in this discussion may include one or more machine-readable storage media for storing data and instructions. The storage media may include different forms of memory including semiconductor memory devices such as dynamic or static random access memories (DRAMs or SRAMs), erasable and programmable read-only memories (EPROMs), electrically erasable and programmable read-only memories (EEPROMs) and flash memories; magnetic disks such as fixed, floppy, removable disks; other magnetic media including tape; and optical media such as compact disks (CDs) or digital video disks (DVDs). Instructions that make up the various software layers, routines, or modules in the various systems may be stored in respective storage devices. The instructions when executed by the controllers 210, 250 cause the corresponding system to perform programmed acts.

The particular embodiments disclosed above are illustrative only, as the invention may be modified and practiced in different but equivalent manners apparent to those skilled in the art having the benefit of the teachings herein. Furthermore, no limitations are intended to the details of construction or design herein shown, other than as described in the claims below. Consequently, the method, system and portions thereof and of the described method and system may be implemented in different locations, such as the wireless unit, the base station, a base station controller and/or mobile switching center. Moreover, processing circuitry required to implement and use the described system may be implemented in application specific integrated circuits, software-driven processing circuitry, firmware, programmable logic devices, hardware, discrete components or arrangements of the above components as would be understood by one of ordinary skill in the art with the benefit of this disclosure.

## Claims

1. A method, comprising:
associating a delay with a request to transmit information; and
transmitting a signal identifying a time at which information is permitted to be transmitted based on the delay.

2. A method, as set forth in claim 1, further comprising:
transmitting a synchronizing signal, and wherein transmitting a signal identifying the time at which information is permitted to be transmitted further comprises transmitting a signal identifying the time as a function of the synchronizing signal at which information is permitted to be transmitted.

3. A method, as set forth in claim 2, wherein transmitting the signal identifying the time as a function of the synchronizing signal at which information is permitted to be transmitted further comprises transmitting over a shared channel the signal identifying the time as a function of the synchronizing signal at which information is permitted to be transmitted.

4. A method, as set forth in claim 1, wherein associating a delay with the request to transmit information further comprises determining a propagation delay.

5. A method, as set forth in claim 1, wherein associating a delay with the request to transmit information further comprises determining a processing delay.

6. A method, as set forth in claim 1, further comprising:
receiving the information at a first preselected time;
comparing the first preselected time with the identified time to determine the delay associated with the request to transmit information.

7. A method for controlling the flow of information between a user and a base station, comprising:
receiving a synchronizing signal from the base station;
transmitting a signal from the user requesting permission from the base station to transmit information;
receiving a signal from the base station identifying a time relative to the synchronizing signal at which information is to be transmitted; and
transmitting the information from the user to the base station at the identified time.

8. A method, as set forth in claim 7, wherein receiving a signal from the base station identifying the time at which information is to be transmitted further comprises receiving a signal from the base station identifying a substantially unique time at which information is to be transmitted.

9. A method, as set forth in claim 7, wherein receiving a signal from the base station identifying the time at which information is to be transmitted further comprises receiving a signal from the base station identifying a substantially unique frame associated with the synchronizing signal during which information is to be transmitted.

10. A method, as set forth in claim 7, wherein receiving a synchronizing signal from the base station further comprises receiving a synchronizing signal from the base station over a shared channel.
